# EUROPEAN PATENT APPLICATION

(11) **EP 4 804 283 A1**
(43) Date of publication of application: **09.09.2026**
(21) Application number: 24885810.2
(22) Date of filing: 31.10.2024
(51) Int. Cl.: H01M 10/0587, H01G 11/70, H01G 11/78, H01M 10/04, H01M 50/533, H01M 50/545

(54) **POWER STORAGE DEVICE**

(30) Priority: 31.10.2023 JP 2023187276
(71) Applicant: Panasonic Intellectual Property Management Co., Ltd., Kadoma-shi, Osaka 571-0057 (JP)
(72) Inventor: SAKAMOTO, Shinichi, Osaka 571-0057, (JP); GESHI, Shinya, Osaka 571-0057, (JP); KOZUK,I Kiyomi, Osaka 571-0057 (JP)
(74) Representative: Eisenführ Speiser
(86) International application number: PCT/JP2024/038836
(87) International publication number: WO 2025/095043

(57) **Abstract**

A battery (10) comprises: an electrode body (14) in which a strip-shaped positive electrode (11) and a strip-shaped negative electrode (12) are wound with a strip-shaped separator (13) interposed therebetween; an outer can (16) that accommodates the electrode body (14) and includes a cylindrical section (30); and a sealing body (17) that closes an opening of the outer can (16). The negative electrode (13) has a first end and a second end in the axial direction of the electrode body (14), and the negative electrode (12) undergoes current collection on the first end side, and either includes a dispersion section in which sections of the second end that are neighboring in the radial direction are directly joined to or in contact with each other, or includes a dispersion section in which the same are indirectly joined to or in contact with each other via a second upper current collector plate (19) that is conductive.

## Description

### TECHNICAL FIELD

The present disclosure generally relates to a power storage device, and relates to, for example, a battery and a capacitor.

### BACKGROUND ART

Conventional power storage devices include a cylindrical battery disclosed in PATENT LITERATURE 1. This cylindrical battery comprises an electrode assembly in which a positive electrode and a negative electrode are wound with a separator interposed therebetween, a bottomed cylindrical housing can that houses the electrode assembly, and a sealing assembly with which an opening portion of the housing can is capped. The housing can has a cylindrical portion and a bottom, and the cylindrical portion includes an annular groove portion and an annular shoulder portion. The groove portion is formed by producing a radially inward recess in a part of the cylindrical portion. The shoulder portion extends toward an radially inner side at an upper end portion of the cylindrical portion. The sealing assembly is fixed to the housing can by holding the sealing assembly between the groove portion and the shoulder portion via a gasket.

An end portion of the electrode assembly on a side closer to the sealing assembly in an axial direction is formed of a positive electrode core exposed portion, and an end portion of the electrode assembly on a side closer to a bottom plate portion of the housing can in the axial direction is formed of a negative electrode core exposed portion. The positive electrode core exposed portion is bundled up from an outer peripheral side to an inner peripheral side to be welded to an upper current collecting plate, and the upper current collecting plate is electrically connected to the sealing assembly. In addition, the negative electrode core exposed portion is bundled up from an outer peripheral side to an inner peripheral side to be welded to a lower current collecting plate, and the lower current collecting plate is welded to the bottom plate portion of the housing can. A terminal cap of the sealing assembly electrically connected to the positive electrode core exposed portion via the upper current collecting plate constitutes a positive electrode terminal, and the housing can electrically connected to the negative electrode core exposed portion via the lower current collecting plate constitutes a negative electrode terminal.

### CITATION LIST

### PATENT LITERATURE

PATENT LITERATURE 1: Japanese Unexamined Patent Application Publication No. 2018-056091

### SUMMARY

In recent years, in the field of power storage devices including the above-described cylindrical battery, it is desired to improve the capacity and output of the power storage device and improve the performance of the power storage device for use in environments under more severe conditions.

A power storage device according to the present disclosure comprises an electrode assembly in which a band-shaped first electrode and a band-shaped second electrode are wound with a band-shaped separator interposed between the first electrode and the second electrode, a housing can that houses the electrode assembly and includes a cylindrical portion, and a sealing assembly with which an opening portion of the housing can is capped, in which in an axial direction of the electrode assembly, the first electrode has a first end and a second end, the first electrode collects current at a side of the first end, and parts of the second end adjacent to each other in a radial direction include a dispersion portion in which the parts are joined or contact each other directly or include a dispersion portion in which the parts are joined or contact each other indirectly via a connection member having conductivity.

According to the power storage device according to the present disclosure, the performance can be improved.

### BRIEF DESCRIPTION OF DRAWINGS

FIG. 1 is an axial sectional view of a cylindrical battery according to a first embodiment of a power storage device of the present disclosure.
FIG. 2 is a schematic plan view of a negative electrode when unrolled into a band shape.
FIG. 3 is a diagram illustrating an example of a joining method of a groove portion, a second upper current collecting plate, and an upper negative electrode core exposed portion.
FIG. 4(a) is a diagram illustrating a structure of the second upper current collecting plate, FIG. 4(b) is a diagram illustrating a structure of a second upper current collecting plate of a first modification, and FIG. 4(c) is a diagram illustrating a structure of a second upper current collecting plate of a second modification.
FIG. 5 is a sectional view corresponding to FIG. 1 in a cylindrical battery of the first modification.
FIG. 6 is a schematic plan view corresponding to FIG. 2 in a negative electrode of the second modification.
FIG. 7 is a schematic plan view corresponding to FIG. 2 in a negative electrode of the third modification.
FIG. 8 is a schematic plan view corresponding to FIG. 2 in a negative electrode of a fourth modification.
FIG. 9 is a schematic plan view corresponding to FIG. 2 in a negative electrode of a fifth modification.
FIG. 10 is a sectional view corresponding to FIG. 1 in a cylindrical battery of a second embodiment.
FIG. 11 is a schematic plan view of a positive electrode of the cylindrical battery of the second embodiment when unrolled into a band shape.
FIG. 12 is a sectional view corresponding to FIG. 1 in a cylindrical battery of a sixth modification.
FIG. 13 is a sectional view corresponding to FIG. 1 in a cylindrical battery of a third embodiment.
FIG. 14 is a sectional view corresponding to FIG. 1 in a cylindrical battery of a seventh modification.

### DESCRIPTION OF EMBODIMENTS

Hereinafter, embodiments of a power storage device according to the present disclosure will be described in detail with reference to the drawings. The power storage device of the present disclosure may be a primary battery, or may be a secondary battery. Alternatively, the power storage device of the present disclosure may be a capacitor. In all embodiments and modifications described below, a case will be described where the power storage device is a cylindrical secondary battery comprising a non-aqueous electrolyte and a wound electrode assembly, but the power storage device of the present disclosure may comprise an aqueous electrolyte and is not limited to a cylindrical secondary battery using a non-aqueous electrolyte.

With regard to a plurality of embodiments and modifications described below, it is contemplated from the beginning that an altered embodiment may be constructed by appropriately combining characteristic portions of the embodiments and modifications. In the following embodiments, the same components are denoted by the same reference numerals in the drawings, and duplicate descriptions are omitted. Schematic diagrams are included in a plurality of drawings, and the dimensional ratios of lengths, widths, heights, or the like in each member are not necessarily the same between different drawings. In this specification, the sealing assembly side (projecting terminal side (projections side)) in the axial direction (height direction) of the cylindrical battery is defined as "upper", and a bottom plate portion side of the housing can in the axial direction is defined as "lower". In the following description, when referred to as the axial direction, it means the axial direction of the cylindrical battery. The axial direction of the cylindrical battery coincides with an electrode assembly height direction, a positive electrode width direction of an elongate positive electrode, and a negative electrode width direction of an elongate negative electrode.

In all the schematic plan views described below when the negative electrode is unrolled, a region shown in white indicates a region from which a first core (metal foil of the negative electrode) is exposed, a region shown in light gray indicates a region in which a resin is disposed on the first core, and a region shown in dark gray indicates a region in which a first mixture layer is disposed on the first core. In the schematic plan view when the positive electrode is unrolled, a region shown in white indicates a region from which a second core (metal foil of the positive electrode) is exposed, a region shown in light gray indicates a region in which a resin is disposed on the second core, and a region shown in dark gray indicates a region in which a second mixture layer is disposed on the second core.

Of the components described below, components that are not described in the independent claim indicating the highest level concept are optional components, and are not essential components. The present disclosure is not limited to the following embodiment and modifications, and various improvements and changes are possible within the matters described in the claims of the present application and the equivalent scope thereof.

### (First Embodiment)

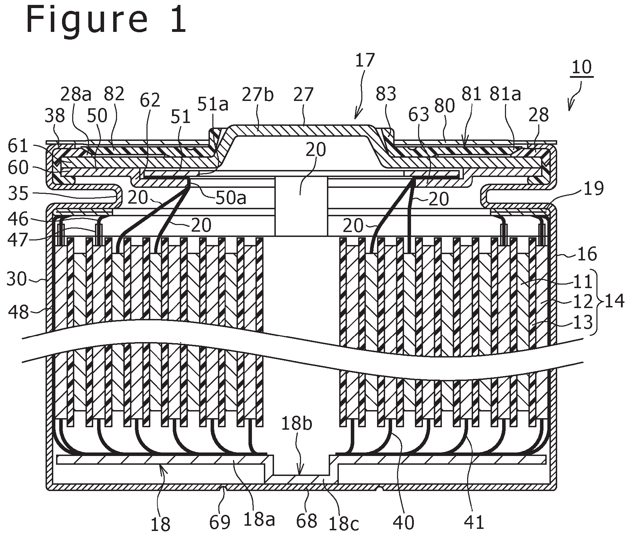

FIG. 1 is an axial sectional view of a cylindrical battery 10 according to a first embodiment of a power storage device of the present disclosure. As illustrated in FIG. 1, the cylindrical battery (hereinafter, simply referred to as a battery) 10 comprises a wound electrode assembly 14, a non-aqueous electrolyte (not illustrated), a bottomed cylindrical housing can 16 that houses the electrode assembly 14 and the non-aqueous electrolyte, and a sealing assembly 17. The electrode assembly 14 has a band-shaped positive electrode 11, a band-shaped negative electrode 12, and two band-shaped separators 13, and has a wound structure in which the positive electrode 11 and the negative electrode 12 are wound with the separators 13 interposed therebetween. In the present embodiment, the negative electrode 12 constitutes a first electrode, and the positive electrode 11 constitutes a second electrode.

The non-aqueous electrolyte has ion conductivity (for example, lithium ion conductivity). The non-aqueous electrolyte may be a liquid electrolyte (electrolyte solution), and may be a solid-state electrolyte. The liquid electrolyte (electrolyte solution) includes a non-aqueous solvent, and an electrolyte salt dissolved in the non-aqueous solvent. For the non-aqueous solvent, for example, esters, ethers, nitriles, amides, or mixed solvents of two of more of these are used. Examples of the non-aqueous solvent include ethylene carbonate (EC), ethylmethyl carbonate (EMC), dimethyl carbonate (DMC), diethyl carbonate (DEC), and mixed solvents of these. The non-aqueous solvent may contain a halogen-substituted product (for example, fluoroethylene carbonate) obtained by substituting at least a part of hydrogen in these solvents with a halogen atom such as fluorine. For the electrolyte salt, for example, a lithium salt such as LiPF₆ is used.

As a solid-state electrolyte, for example, a solid-state or gel-state polymer electrolyte, an inorganic solid-state electrolyte, or the like is used. The polymer electrolyte includes, for example, a lithium salt and a matrix polymer, or a non-aqueous solvent, a lithium salt, and a matrix polymer. As the matrix polymer, for example, a polymer material which absorbs and gels the non-aqueous solvent is used. As the polymer material, for example, fluororesin, acrylic resin, or polyether resin is used. As the inorganic solid-state electrolyte, for example, a material known in an all-solid-state lithium ion secondary battery and the like (for example, an oxide-based solid-state electrolyte, a sulfide-based solid-state electrolyte, and a halide-based solid-state electrolyte) is used.

One or more positive electrode leads 20 are joined and electrically connected to the positive electrode 11, and preferably, a plurality of positive electrode leads 20 are joined and electrically connected to the positive electrode 11 to be arranged at intervals from each other in a longitudinal direction of the positive electrode 11. For example, eight positive electrode leads 20 are joined to the positive electrode 11 in a state of being arranged at intervals. The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are formed to be one size larger than the positive electrode 11, and disposed to sandwich the positive electrode 11.

The positive electrode 11 has an elongate second core (positive electrode core), and a second mixture layer (positive electrode mixture layer) formed on each surface of the second core. For the second core, a foil of metal such as aluminum or an aluminum alloy, which is stable within a potential range of the positive electrode 11, a film in which such a metal is disposed on a surface layer thereof, or the like can be used. The second mixture layer includes a positive electrode active material, a conductive agent, and a binder. The positive electrode 11 is produced by, for example, applying a positive electrode mixture slurry including the positive electrode active material, the conductive agent, the binder, and the like on the second core, drying and subsequently compressing the applied film to form the second mixture layer on each surface of the second core.

The positive electrode active material is made of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the second mixture layer may include carbon materials such as carbon black, acetylene black, Ketjenblack, and graphite. Examples of the binder included in the second mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The positive electrode 11 has the same number of third exposed portions as that of the positive electrode leads 20, the third exposed portions being disposed at intervals in the longitudinal direction. The positive electrode leads 20 are joined to the respective third exposed portions. A plurality of positive electrode leads 20 are joined to the second core to be arranged at intervals from each other in the longitudinal direction of the second core, and preferably joined to the second core to be arranged at substantially equal intervals in the longitudinal direction, so that a current path of the positive electrode 11 in the longitudinal direction can be shortened and an electrical resistance (internal resistance) of the battery 10 can be reduced. The positive electrode leads 20 are preferably covered with an insulating tape (not illustrated), thereby preferably reducing the occurrence of a short circuit between the positive electrode 11 and the negative electrode 12. The insulating tape preferably covers all the third exposed portions.

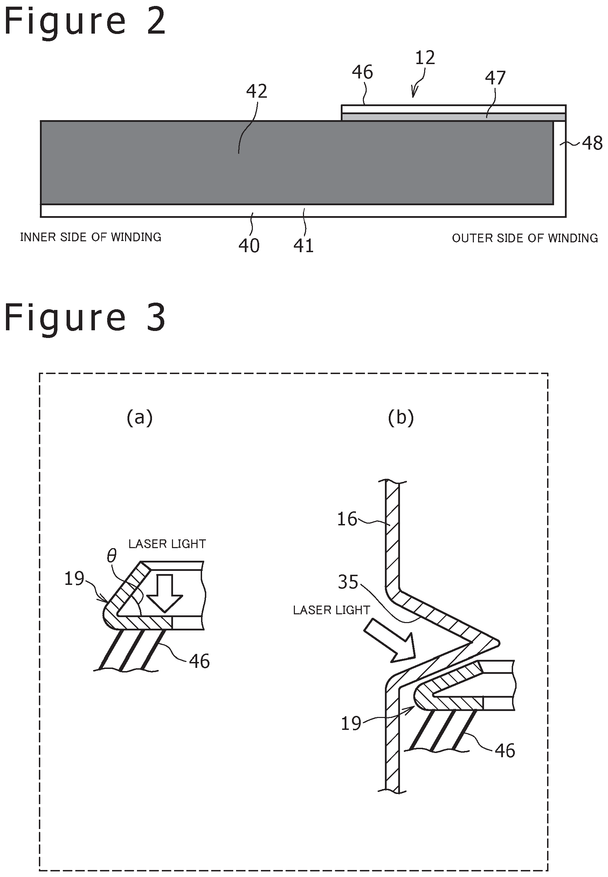

FIG. 2 is a schematic plan view of the negative electrode 12 when unrolled. As illustrated in FIG. 2, the negative electrode 12 has a band-shaped first core (negative electrode core) 40, and a first mixture layer (negative electrode mixture layer) 42 formed on each surface of the first core 40. The negative electrode 12 has a band-shaped first exposed portion (negative electrode core exposed portion) 41 at a first end of the first core 40 in the width direction (axial direction). The first exposed portion 41 is provided from an inner peripheral end to an outer peripheral end in the winding direction. A lower end portion of the electrode assembly 14 in the axial direction is constituted by the first exposed portion 41.

The first mixture layer 42 has a band shape (rectangular shape). A second end of the negative electrode 12 in the axial direction on the outer peripheral side thereof is constituted by a band-shaped second exposed portion (negative electrode core exposed portion) 46 in which the first mixture layer 42 is not provided. The second exposed portion 46 projects upward in the axial direction with respect to the separator 13. A buffer portion is formed in the second exposed portion 46. On the second exposed portion 46, a band-shaped resin layer 47 is formed on the first end side.

In the present embodiment, the band-shaped resin layer 47 is provided on each surface of the second exposed portion 46. With respect to the axial direction, the resin layer 47 is located between the second exposed portion 46 and the first mixture layer 42. The resin layer 47 and the second exposed portion 46 project upward from the first mixture layer 42. The resin layer 47 is made of a resin material having spring property (elasticity), and is made of, for example, polyvinylidene fluoride (PVdF).

In an outer peripheral end portion of the negative electrode 12 in the winding direction, a peripheral end exposed portion 48 is provided at a portion adjacent to the first mixture layer 42 in the longitudinal direction of the negative electrode 12. The resin layer 47 and the second exposed portion 46 exist also on the upper side of the peripheral end exposed portion 48, and the first exposed portion 41 exists also on the lower side of the peripheral end exposed portion 48. At least a part of the peripheral end exposed portion 48 is present on an outermost peripheral surface of the electrode assembly 14, and contacts an inner peripheral surface of the housing can 16. This allows the electrical resistance of the battery 10 to be reduced. The negative electrode 12 may constitute an inner peripheral end of the electrode assembly 14. However, the separator 13 generally extends beyond the inner peripheral end of the negative electrode 12, and an inner peripheral end of the separator 13 serves as the inner peripheral end of the electrode assembly 14.

For the first core 40, a foil of metal such as copper or a copper alloy, which is stable within a potential range of the negative electrode 12, a film in which such a metal is disposed on a surface layer thereof, or the like can be used. The first mixture layer 42 includes a negative electrode active material, and a binder. The negative electrode 12 is produced by, for example, applying a negative electrode mixture slurry including the negative electrode active material, the binder, and the like on the first core, drying and subsequently compressing the applied film to form the first mixture layer 42 on each surface of the first core 40.

For the negative electrode active material, a carbon material that reversibly occludes and releases lithium ions is generally used. A carbon material is, for example, graphite including natural graphite such as flaky graphite, massive graphite, and earthy graphite, and artificial graphite such as massive artificial graphite and graphitized mesophase carbon microbeads. The first mixture layer 42 may include, as the negative electrode active material, a silicon (Si) material containing Si in addition to the carbon material. For the negative electrode active material, a metal alloyed with lithium other than Si, an alloy containing such a metal, a compound containing such a metal, and the like may be used.

For the binder included in the first mixture layer 42, fluorocarbon resins, PAN, polyimide resins, acrylic resins, polyolefin resins, and the like may be used as in the case of the positive electrode 11, and a styrene-butadiene rubber (SBR) or a modification thereof may be used. In the negative electrode mixture layer, for example, in addition to SBR and the like, CMC or a salt thereof, polyacrylic acid (PAA) or a salt thereof, polyvinyl alcohol, or the like may be included.

The separator 13 has a band shape, and a porous sheet having ion permeability and an insulation property is used as the separator 13. Specific examples of the porous sheet include a microporous thin film, a woven fabric, and a nonwoven fabric. As the material of the separator 13, for example, a polyolefin resin such as polyethylene or polypropylene, or a cellulose is used. The separator 13 may be either a single layer structure or a laminated structure. A heat-resistant layer or the like may be formed on a surface of the separator 13.

As illustrated in FIG. 1, the sealing assembly 17 has a first upper current collecting plate 50 and a terminal cap 27. The first upper current collecting plate 50 is a plate member made of a metal and having an annular shape, and has an insertion hole 50a at a radial center portion. The terminal cap 27 is a metallic plate-shaped member and is located on an upper side of the sealing assembly 17 in the axial direction. In the upper surface of the terminal cap 27, a center portion thereof is exposed to the outside. A terminal portion 27b projecting outward in the axial direction exists at the center portion of the terminal cap 27, and the terminal portion 27b constitutes a positive electrode terminal. The sealing assembly 17 further has an auxiliary current collecting plate 51. The auxiliary current collecting plate 51 is a plate member made of a metal and having an annular shape. The auxiliary current collecting plate 51 has a through hole 51a formed by a cylindrical hole.

On the second end side of the negative electrode 12, each positive electrode lead 20 is bent along an upper surface of the first upper current collecting plate 50 from the positive electrode 11 through the insertion hole 50a in the first upper current collecting plate 50. A tip portion of each positive electrode lead 20 is sandwiched between the upper surface of the first upper current collecting plate 50 and a lower surface of the auxiliary current collecting plate 51. Each positive electrode lead 20 is joined to the upper surface of the first upper current collecting plate 50. The first upper current collecting plate 50 and the auxiliary current collecting plate 51 are also joined to each other, and each positive electrode lead 20 and the auxiliary current collecting plate 51 are also joined to each other.

The joining can be implemented by, for example, irradiating the auxiliary current collecting plate 51 from above with laser light to perform laser welding in a state in which the tip portion of each positive electrode lead 20 is sandwiched between the first upper current collecting plate 50 and the auxiliary current collecting plate 51. The laser welding is performed in the state in which the tip portion of each positive electrode lead 20 is sandwiched between the first upper current collecting plate 50 and the auxiliary current collecting plate 51 thereby making it possible to reliably and easily join each positive electrode lead 20 to the first upper current collecting plate 50. In the power storage device of the present disclosure, the auxiliary current collecting plate need not be used. Alternatively, the positive electrode leads 20 may be joined directly to the terminal cap 27 without using the first upper current collecting plate 50. In a case where the first upper current collecting plate 50 is not used, only the terminal cap 27 may be interposed between the shoulder portion 38 and the groove portion 35 in the sealing assembly 17. In a case where the first upper current collecting plate 50 is used, only the first upper current collecting plate 50 may be interposed between the shoulder portion 38 and the groove portion 35 in the sealing assembly 17, and the outer peripheral edge portion of the terminal cap 27 may be located between the shoulder portion 38 and the groove portion 35.

The first upper current collecting plate 50 has an annular outer peripheral portion 60 that is located radially outward and extends in a radial direction, an annular step portion 62 extending downward from an end portion on a radial inward side of the outer peripheral portion 60, and an annular inner peripheral portion 63 extending radially inward from a lower end portion of the annular step portion 62. A lower surface of the terminal cap 27, an inner peripheral surface of the annular step portion 62, and an upper surface of the annular inner peripheral portion 63 define an annular space that opens radially inward. At least a part of the auxiliary current collecting plate 51 is housed in this annular space. The positive electrode leads 20 are joined to the upper surface of the inner peripheral portion 63. The positive electrode leads 20 thus extend in the axial direction on the inner peripheral side with respect to the buffer portion, thereby making it possible to efficiently collect current at the positive electrode 11 side.

The battery 10 has a metallic lower current collecting plate 18 made of copper, iron, nickel, a nickel alloy or the like on a lower side of the electrode assembly 14 in the axial direction. In the present embodiment, the lower current collecting plate 18 has a base portion 18a and a projecting portion 18b, and the projecting portion 18b projects downward from the base portion 18a at the radial center portion. Laser light is emitted to a lower surface of the base portion 18a from below in a state in which an upper surface of the base portion 18a is pressed against the first exposed portion 41 constituting the lower end portion of the electrode assembly 14 in the axial direction. By means of this laser welding, the first exposed portion 41 is joined to the upper surface of the base portion 18a. Furthermore, after a bottom plate portion 18c of the projecting portion 18b is superposed on an upper surface of the bottom plate portion 68 of the housing can 16, laser light is emitted to the bottom plate portion 68 from below. By means of this laser welding, the lower current collecting plate 18 is joined to the bottom plate portion 68, and is electrically connected to the housing can 16. Thus, a first current collecting path between the first end of the negative electrode 12 and the housing can 16 is formed. The first exposed portion 41 is joined to the lower current collecting plate 18 over a wide range in the longitudinal direction of the negative electrode 12, so that the current collecting path in the longitudinal direction of the negative electrode 12 can be shortened and the electrical resistance of the battery 10 can be reduced. However, the lower current collecting plate 18 need not be provided. The first exposed portion 41 may also be joined directly to the bottom plate portion 68.

The housing can 16 has a cylindrical portion 30 and the bottom plate portion 68, and the cylindrical portion 30 includes the shoulder portion 38 and the groove portion 35. The groove portion 35 can be formed by, for example, recessing a part of an outer peripheral surface of the cylindrical portion 30 of the housing can 16 toward the radially inward side by spinning radially inward and protruding the corresponding inner peripheral surface of the cylindrical portion 30 in a radial direction. An opening portion of the housing can 16 is capped with the sealing assembly 17 via a gasket 28. Specifically, the sealing assembly 17 is disposed on the groove portion 35, and is crimped to be fixed to the opening portion of the housing can 16 via the gasket 28 made of resin. The shoulder portion 38 is formed when an upper end portion of the cylindrical portion 30 is bent toward a radially inner side and crimped to be fixed to a flange portion 61 of the sealing assembly 17, and extends radially inward at the top end portion of the cylindrical portion 30.

A portion between the housing can 16 and the sealing assembly 17 is sealed with the annular gasket 28, so that an internal space of the battery 10 is closed. The gasket 28 is made of, for example, polyolefin. The gasket 28 is held between the housing can 16 and the sealing assembly 17, and insulates the sealing assembly 17 from the housing can 16. The gasket 28 has a role of a seal material for maintaining the airtightness of the inside of the battery and a role as an insulating material for insulating the sealing assembly 17 from the housing can 16.

The battery 10 has a thin portion 69 in the bottom plate portion 68 of the housing can 16. The thin portion 69 can be formed by providing a mark having a circular shape, a C-shape or like on the bottom plate portion 68. Providing the thin portion 69 in the bottom plate portion 68 enables the bottom plate portion 68 to smoothly rupture from the thin portion 69 when abnormal heat generation occurs in the battery 10. Accordingly, when abnormal heat generation occurs in the battery 10, high-temperature gas and a melt in the battery can be smoothly discharged to the outside, so that the safety of the battery 10 can be improved.

The battery 10 further comprises an annular metal plate 80 and an annular insulating plate 81 made of an insulating material. The metal plate 80 extends in a substantially radial direction. The metal plate 80 is joined to the upper surface of the shoulder portion 38. The metal plate 80 to which the first exposed portion 41 is electrically connected via the lower current collecting plate 18 and the housing can 16 serves as a negative electrode terminal. The metal plate 80 is electrically connected to, for example, a current collecting plate (not illustrated) to which a plurality of batteries 10 are connected in series or in parallel, using a tongue portion (lead) of the current collecting plate. Thus, the plurality of batteries 10 can be easily electrically connected to the current collecting plate.

The insulating plate 81 insulates the metal plate 80 from the sealing assembly 17, with interposed between the metal plate 80 and the sealing assembly 17. An outer peripheral edge portion 81a on a radially outward side of the insulating plate 81 may be located on an upper side of a projecting portion 28a of the gasket 28 to contact the gasket 28. Thus, the metal plate 80 can be reliably insulated from the sealing assembly 17 by the gasket 28 and the insulating plate 81. The insulating plate 81 includes a base portion 82 and a cylindrical portion 83 that covers an outer peripheral surface of the terminal portion 27b of the terminal cap 27. The cylindrical portion 83 is connected to a radially inward side of the base portion 82. The battery need not have the metal plate and the insulating plate.

The battery 10 further comprises a second upper current collecting plate 19 made of a metal and having an annular shape. An upper surface of the second upper current collecting plate 19 is joined to a lower surface of the groove portion 35, and the second exposed portion 46 is joined to a lower surface of the second upper current collecting plate 19. The joining can be implemented by, for example, the following method. As illustrated in FIG. 3A, the second upper current collecting plate 19 having a V-shaped cross section is prepared, and laser light is emitted to the second upper current collecting plate 19 from above in a state in which a tip side of the second exposed portion 46 is pressed against the lower surface of the second upper current collecting plate 19. By emitting the laser light, the second exposed portion 46 is laser-joined to the second upper current collecting plate 19, so that the electrode assembly 14 and the second upper current collecting plate 19 are integrated. By this joining, a second current collecting path between the second end and the housing can 16 is formed.

Next, the electrode assembly 14 is housed in the housing can 16 so that the second upper current collecting plate 19 is located on the upper side. Subsequently, as illustrated in FIG. 3B, the spinning process is performed until the lower surface of the groove portion 35 becomes along the upper surface of the second upper current collecting plate 19. Then, laser light is emitted toward the lower surface of the groove portion 35 from the outside of the housing can 16. By emitting the laser light, the lower surface of the groove portion 35 and the upper surface of the second upper current collecting plate 19 are joined by means of laser welding.

Then, the spinning process is performed until the upper surface of the groove portion 35 expands in a substantially radial direction. An inclination angle θ of the second upper current collecting plate 19 having a V-shaped cross section decreases as the spinning process is performed. Then, the second upper current collecting plate 19 receives an axial load when the upper end portion of the cylindrical portion 30 is crimped, and is bent until the inclination angle θ reaches an angle close to 0. The groove portion 35, the second upper current collecting plate 19, and the second exposed portion 46 are joined in this manner. At least a part of the second exposed portion 46 overlaps with the groove portion 35 in the axial direction, and in the present embodiment, the second exposed portion 46 overlaps with the groove portion 35 in the axial direction as a whole. It is preferable that a joining structure of the groove portion 35, the second upper current collecting plate 19, and the second exposed portion 46 can be easily achieved, and the second exposed portion 46 overlaps with the groove portion 35 in the axial direction as a whole to prevent the second exposed portion 46 from contacting the positive electrode lead 20.

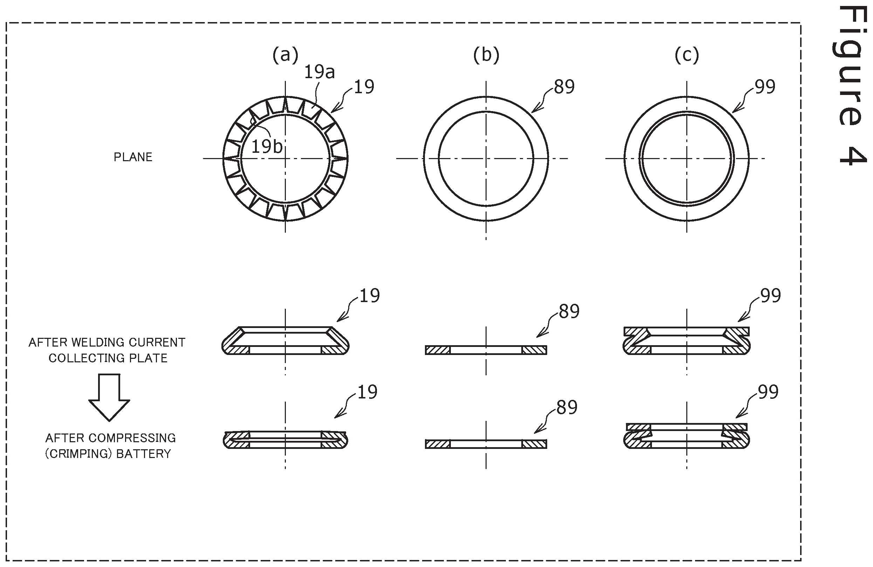

FIG. 4(a) is a diagram illustrating a plan view when the second upper current collecting plate 19 before processing is viewed from above, an axial sectional view of the second upper current collecting plate 19 after the second upper current collecting plate is welded, and an axial sectional view of the second upper current collecting plate 19 after the battery is compressed. FIG. 4(b) is a diagram illustrating a plan view when a second upper current collecting plate 89 of a first modification before processing is viewed from above, an axial sectional view of the second upper current collecting plate 89 of the first modification after the second upper current collecting plate of the first modification is welded, and an axial sectional view of the second upper current collecting plate 89 of the first modification after the battery is compressed. FIG. 4(c) is a diagram illustrating a plan view when a second upper current collecting plate 99 of a second modification before processing is viewed from above, an axial sectional view of the second upper current collecting plate 99 of the second modification after the second upper current collecting plate of the second modification is welded, and an axial sectional view of the second upper current collecting plate 99 of the second modification after the battery is compressed.

As illustrated in FIG. 4(a), it is preferable that a plurality of cutouts 19b arranged at intervals in a circumferential direction (for example, at equal intervals in the circumferential direction) are provided in an upper plate portion 19a bent in the second upper current collecting plate 19. A tip portion of the upper plate portion 19a is displaced radially inward as the upper plate portion 19a is bent, and accordingly, an internal stress of the upper plate portion 19a increases. Providing the plurality of cutouts 19b in the upper plate portion 19a makes it possible to relax the stress and reduce damage on the upper plate portion 19a, for example, to reduce formation of wrinkles in the upper plate portion 19a. A case has been described where the second upper current collecting plate 19 has a V-shaped cross section before processing. However, as illustrated in FIG. 4(b), the second upper current collecting plate 89 before processing may have an annular plate shape, and as illustrated in FIG. 4(c), the second upper current collecting plate 99 before processing may have an S-shaped cross section.

Next, there will be described the operational effects obtained by providing the band-shaped second exposed portion 46 located on the upper side relative to the separator 13 at the upper end portion of the negative electrode 12 in the axial direction on the outer side of winding in the negative electrode longitudinal direction and joining the second exposed portion 46 to the housing can 16 via the second upper current collecting plate 19, and the other operational effects.

In recent years, electric vehicles (EV) are increasingly spreading, but it cannot be said that the spread is sufficient. As the problem of spread of electric vehicles, it is believed one of the factors is that the charging time is longer than the gasoline refueling time. Fast charging capable batteries are desired to improve user's convenience and avoid occupying a charging station for a long time.

In such a background, parts adjacent to each other in the radial direction in the second exposed portion 46 constituting the second end may include a dispersion portion in which the parts are joined or contact each other directly or may include a dispersion portion in which the parts are joined or contact each other indirectly via the second upper current collecting plate 19 having conductivity. For example, in the present embodiment, the portions adjacent to each other in the radial direction in the second exposed portion 46 are connected indirectly via the second upper current collecting plate 19 and are electrically connected to each other, so that the current collecting paths on the negative electrode side can be further shortened. Accordingly, the electrical resistance of the battery 10 can be further reduced and the fast charging can be achieved more easily. The second upper current collecting plate 19 constitutes a connecting member, and the portions adjacent to each other in the radial direction in the second exposed portion 46 constitute a dispersion portion (current collecting path shortening portion). A case has been described where the portions adjacent to each other in the radial direction in the second exposed portion 46 are joined indirectly via the second upper current collecting plate 19. However, the portions adjacent to each other in the radial direction in the second exposed portion 46 may contact each other indirectly via the second upper current collecting plate 19. Alternatively, the portions adjacent to each other in the radial direction in the second exposed portion 46 may be joined directly to each other or may directly contact each other.

Furthermore, the battery 10 of the present disclosure comprises the second upper current collecting plate 19 located on the upper side of the second exposed portion 46 which is a buffer portion in the axial direction, and the second exposed portion 46 is joined to the second upper current collecting plate 19 and the second upper current collecting plate 19 is joined to the lower side of the groove portion 35. Accordingly, in the lower side of the electrode assembly 14, the first exposed portion 41 can be electrically connected to the bottom plate portion 68 of the housing can 16 via the lower current collecting plate 18 (forming a first current collecting path), and in the upper side of the electrode assembly 14, the second exposed portion 46 can be electrically connected to the groove portion 35 of the housing can 16 via the second upper current collecting plate 19 (forming a second current collecting path). Therefore, also for this reason, the electrical resistance of the battery 10 can be further reduced and the fast charging can be achieved easily.

In brief, the portions adjacent to each other in the radial direction in the second exposed portion 46 are connected indirectly via the second upper current collecting plate 19 and are electrically connected to each other, so that the current collecting paths on the negative electrode side can be shortened. Accordingly, the electrical resistance of the battery 10 can be reduced and the fast charging can be achieved easily.

In addition, the battery 10 of the present disclosure comprises the second upper current collecting plate 19 located on the upper side of the second exposed portion 46 in the axial direction, and the second exposed portion 46 is joined to the second upper current collecting plate 19 and the second upper current collecting plate 19 is joined to the lower side of the groove portion 35. Accordingly, in the lower side of the electrode assembly 14, the first exposed portion 41 can be electrically connected to the bottom plate portion 68 of the housing can 16 via the lower current collecting plate 18, and in the upper side of the electrode assembly 14, the second exposed portion 46 can be electrically connected to the groove portion 35 of the housing can 16 via the second upper current collecting plate 19.

Therefore, with regard to the negative electrode 12, the negative electrode 12 can be electrically connected to two upper and lower portions of the housing can 16 by the two upper and lower systems, so that with regard to the negative electrode 12 side, the current collecting paths can be significantly shortened and the electrical resistance of the battery 10 can be significantly reduced. Therefore, the Joule heat generated in the battery 10 during charging can be reduced, so that the temperature rise of the battery 10 during charging can be reduced and fast charging can be easily achieved.

To improve productivity of electric vehicles (EV) or energy storage systems (ESS), a cylindrical battery has become large in diameter and size. Accordingly, since the weight of the cylindrical battery increases and the weight of the electrode assembly increases, the inertia force acting on the electrode assembly due to vibration or impact increases, making it easy to damage components and welding portions in the cylindrical battery.

On the contrary, in the battery 10 of the present disclosure, the band-shaped second exposed portion 46 projecting upward with respect to the separator 13 exists on the upper end portion of the negative electrode 12 in the axial direction on the outer side of winding in the negative electrode longitudinal direction. Accordingly, the axial vibration or impact can be absorbed by the second exposed portion 46 having spring property (elasticity), which makes it possible to reduce damage on components and welding portions in the battery 10. Therefore, the battery 10 is unlikely to be damaged, and the reliability of the battery 10 can be improved.

As in the present embodiment, when the battery 10 is a secondary battery, it has been found out that the positive electrode 11 and the negative electrode 12 extend in the axial direction when charge and discharge are repeated. In such a background, even when the positive electrode 11 and the negative electrode 12 extend in the axial direction due to repeated charge and discharge, the extension can be absorbed by the buffer portion having the spring property. Therefore, even when the positive electrode 11 and the negative electrode 12 extend in the axial direction, it is possible to effectively reduce buckling in the first mixture layer 42 and the second mixture layer, and in this respect, the reliability of the battery 10 can be significantly improved. In addition, in the buffer portion formed at the second end of the negative electrode 12, the cushioning property of the buffer portion is further improved by bending so as to tilt the buffer portion in the radial direction of the electrode assembly 14 in advance. If the function as the buffer portion can be achieved, the buffer portion need not be formed only of the core unlike the second exposed portion. The buffer portion may be formed in a region in which the first mixture layer is formed.

The second exposed portion 46 has the same potential as that of the housing can 16, so that the second exposed portion 46 can contact the housing can 16, and in the general cylindrical batteries, the upper insulating plate disposed on the upper side of the electrode assembly can be eliminated. Accordingly, the number of components of the battery 10 can be reduced, and the manufacturing cost of the cylindrical battery can be reduced.

The housing can 16 has the groove portion 35 recessed radially inward over the entire circumference, and the second exposed portion 46 overlaps with the groove portion 35 in the axial direction. Accordingly, an axial distance between the second exposed portion 46 and the groove portion 35 is reduced, so that the second exposed portion 46 is joined to or contacts directly or indirectly the groove portion 35 easily. In addition, the second exposed portion 46 is prevented from becoming excessively long, so that the vibration or impact can be effectively and easily absorbed by the second exposed portion 46 and the vibration or impact is easily and quickly damped. Moreover, the second exposed portion 46 is prevented from becoming excessively long, so that contact between the second exposed portion 46 and the positive electrode lead 20 can be reduced.

At least a part of the end portion of the negative electrode 12 on the outer side of winding in the negative electrode longitudinal direction is constituted by the peripheral end exposed portion 48, so that the current collecting paths can be shortened by causing the peripheral end exposed portion 48 to contact the inner peripheral surface of the housing can 16 and the electrical resistance of the battery 10 can be reduced.

At least one surface of the negative electrode 12 in the negative electrode thickness direction has the resin layer 47 that is adjacent to the second exposed portion 46 in the axial direction and is disposed on the first core 40. Accordingly, the resin layer 47 rich in the spring property (elasticity) exists on the first mixture layer 42 side of the second exposed portion 46, so that in the negative electrode 12, the spring property (elasticity) of a portion located on the upper side relative to the first mixture layer 42 can be increased. Therefore, the vibration or impact can be further effectively absorbed by the second exposed portion 46 and the resin layer 47, and the reliability of the battery 10 can be further improved.

### (Modifications of First Embodiment)

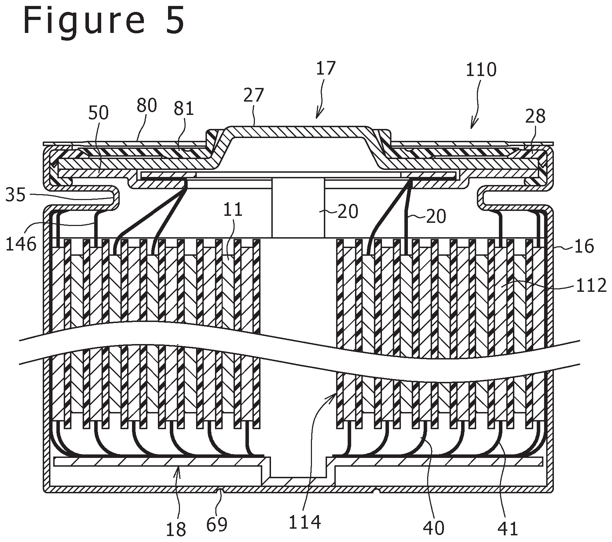

In the battery 10 in the first embodiment, the second upper current collecting plate 19 is disposed between the second exposed portion (negative electrode core exposed portion) 146 located on the upper side relative to the first mixture layer 42 and the groove portion 35. However, as illustrated in FIG. 5, that is, a sectional view corresponding to FIG. 1 of a cylindrical battery (hereinafter, simply referred to as a battery) 110 in a first modification, a second upper current collecting plate need not be disposed between a second exposed portion 146 located on the upper side relative to a negative electrode mixture layer and a groove portion 35. The second exposed portion 146 may face the lower surface of the groove portion 35 in the axial direction in a state of contacting or not contacting the lower surface of the groove portion 35, without being joined to a lower surface of the groove portion 35. The length of the second exposed portion 146 of a negative electrode 112 is preferably longer than the axial lengths of the first mixture layer 42 and the groove portion 35 so that an axial gap between the groove portion 35 and an electrode assembly 114 is not created. Alternatively, the second exposed portion 146 may be joined to the lower surface of the groove portion 35.

As described above, the second exposed portion 146 may face the lower surface of the groove portion 35 in the axial direction in a state of not contacting the lower surface of the groove portion 35. Also in this case, if the second exposed portion 146 includes current collecting path shortening portions that are radially adjacent to each other and are joined or contact each other directly or includes current collecting path shortening portions that are joined or contact each other indirectly via the connection member having conductivity, the current collecting paths on the negative electrode side can be shortened and the electrical resistance of the battery 10 can be reduced. Even when the second exposed portion 146 faces the lower surface of the groove portion 35 in a state of not contacting the lower surface of the groove portion 35, the second exposed portion 146 having spring property (elasticity) contacts the groove portion 35 when the battery 110 receives the axial vibration or impact, so that the vibration or impact can be absorbed by the second exposed portion 146, which makes it possible to reduce damage on the battery 110.

Portions adjacent to each other in the radial direction in the second exposed portion 146 are preferably joined to each other by means of laser welding or resistance welding before the electrode assembly 114 is housed in the housing can 16. When the portions adjacent to each other in the radial direction in the second exposed portion 146 are joined to each other, the electrical resistance of the battery 110 can be reduced and the quick charging is easily achieved. When the portions adjacent to each other in the radial direction in the second exposed portion 146 are joined to each other, the strength of the second exposed portion 146 can be increased, so that the spring property (elasticity) of the second exposed portion 146 can be increased and the absorbing performance of the second exposed portion 146 against the vibration or impact can be improved.

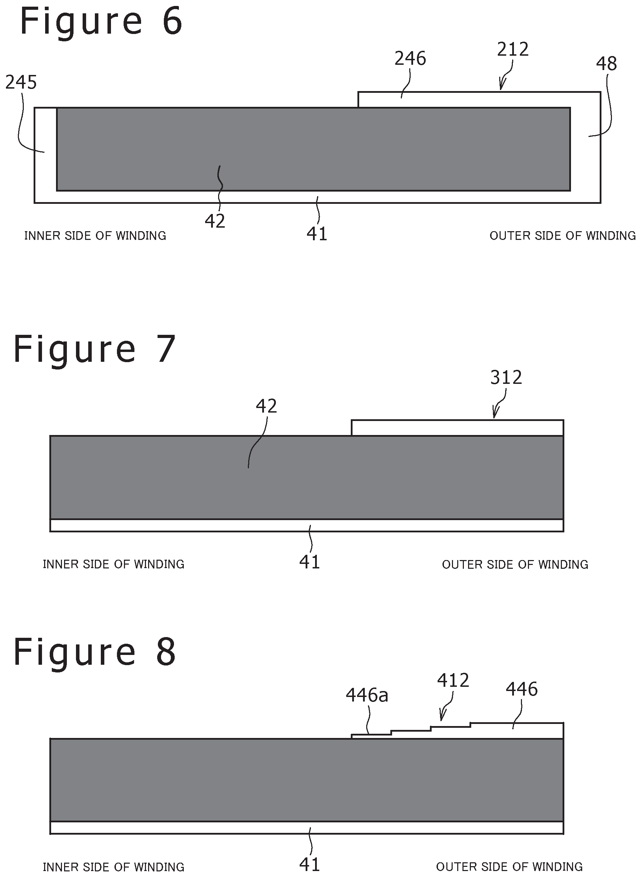

In addition, a case has been described where the resin layer 47 is provided between the second exposed portion 46 and the first mixture layer 42 in the axial direction (negative electrode width direction). However, as illustrated in FIG. 6, that is, a schematic plan view corresponding to FIG. 2 in a negative electrode 212 in a second modification, the negative electrode 212 need not have the resin layer. A second exposed portion 246 may be configured to project upward from the first mixture layer 42 and an peripheral end exposed portion 48 provided at an end portion on the outer side of winding. The negative electrode 212 may further have a peripheral end exposed portion 245 on an inner peripheral edge portion.

As illustrated in FIG. 7, that is, a schematic plan view corresponding to FIG. 2 in a negative electrode 312 in a third modification, the negative electrode 312 need not have a peripheral edge exposed portion adjacent to a first mixture layer 42 in the negative electrode longitudinal direction at an outer peripheral side in the longitudinal direction, and need not have the negative electrode core exposed portion adjacent to the first mixture layer 42 in the negative electrode longitudinal direction at an inner peripheral side.

As illustrated in FIG. 8, that is, a schematic plan view corresponding to FIG. 2 in a negative electrode 412 in a fourth modification, a region on an outer peripheral side in an upper end portion (second end) of the negative electrode 412 in the axial direction may be constituted by a second exposed portion 446. The axial length of the second exposed portion 446 may gradually decrease stepwise toward the inner side of winding in the negative electrode longitudinal direction.

A positive electrode lead 20 extending in the axial direction exists on an inner peripheral side of the second exposed portion 446. Accordingly, when the length of a radially inward side-portion (inner side-portion of winding) of the second exposed portion 446 is unnecessarily long, an inner peripheral side-portion 446a may contact the positive electrode lead 20. According to this configuration, the axial length of the inner peripheral side-portion 446a is short, so that contact between the second exposed portion 446 and the positive electrode lead 20 can be reliably prevented.

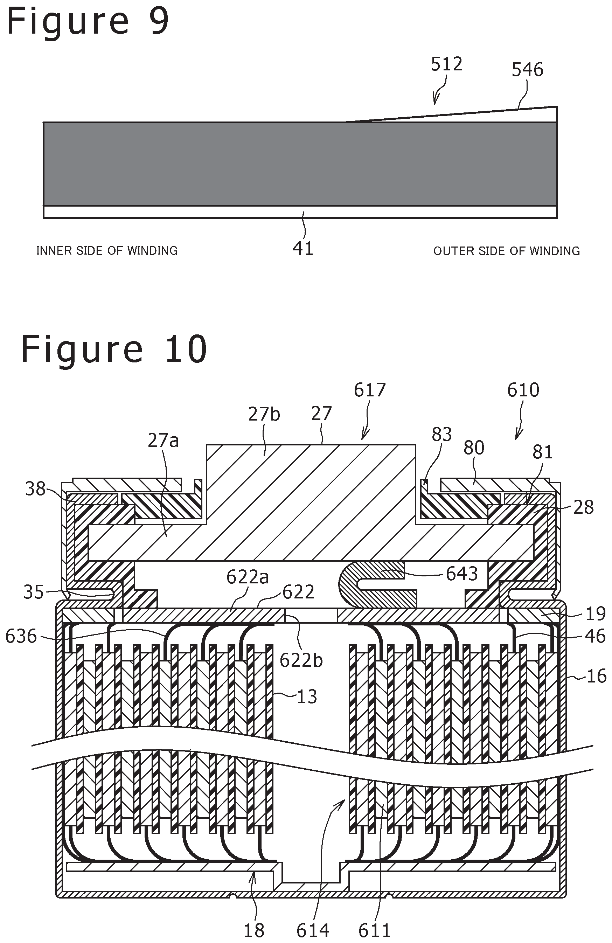

As illustrated in FIG. 9, that is, a schematic plan view corresponding to FIG. 2 in a negative electrode 512 in a fifth modification, an outer peripheral side of a second end of the negative electrode 512 may be constituted by a second exposed portion 546. The axial length of the second exposed portion 546 may continuously decrease toward the inner peripheral side from the outer peripheral side. Even in this case, as in a case where the negative electrode 412 in the fourth modification is used, contact between the second exposed portion 546 and the positive electrode lead 20 can be reliably prevented.

### (Second Embodiment)

In the following embodiments including a second embodiment, for the operational effects similar to those in the first embodiment, and modifications, their descriptions will be omitted.

In the first embodiment, a case has been described where the positive electrode 11 and the sealing assembly 17 are electrically connected to each other using one or more positive electrode leads 20. However, as illustrated in FIG. 10, that is, a sectional view corresponding to FIG. 1 in a cylindrical battery (hereinafter, simply referred to as a battery) 610 in the second embodiment, a positive electrode lead need not be used, and a third exposed portion (positive electrode core exposed portion) 636 of a positive electrode 611 may be electrically connected to a sealing assembly 617.

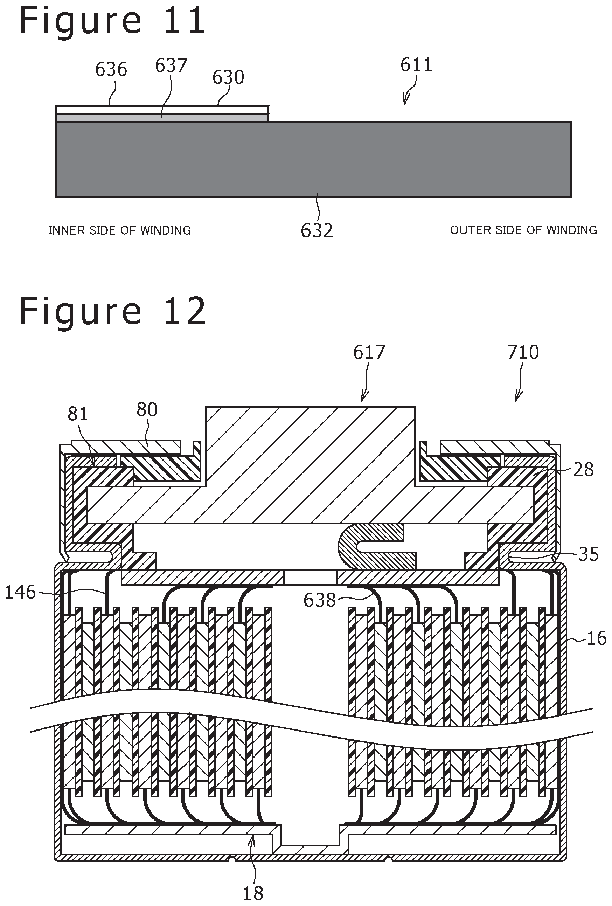

Specifically, as illustrated in FIG. 11, that is, a schematic plan view when the positive electrode 611 is unrolled, the positive electrode 611 has a band-shaped second core (positive electrode core) 630, and a second mixture layer 632 formed on each surface of the second core 630. The second mixture layer 632 has a elongate shape (rectangular shape). An axial end portion (end portion on a second end side) of the positive electrode 611 on the inner peripheral side in the longitudinal direction is constituted by the band-shaped third exposed portion 636. The third exposed portion 636 is located on the upper side in the axial direction than the separator 13. At least one surface of the positive electrode 11 in the positive electrode thickness direction has a band-shaped resin layer 637 that is adjacent to the third exposed portion 636 in the axial direction (positive electrode width direction) and is disposed on the second core 630. The resin layer 637 is provided mainly to prevent the positive electrode 611 and the negative electrode 612 from being electrically connected to each other.

In the present embodiment, the band-shaped resin layer 637 is provided on each surface of the positive electrode 11 in the positive electrode thickness direction. With respect to the axial direction, the resin layer 637 is located between the third exposed portion 636 and the second mixture layer 632. The resin layer 637 and the third exposed portion 636 project upward from the second mixture layer 632. The resin layer 637 is made of, for example, polyvinylidene fluoride (PVdF).

Referring to FIG. 10, a sealing assembly 617 is fixed to a housing can 16 by holding the sealing assembly 617 between a shoulder portion 38 and a groove portion 35 via a gasket 28 by crimping. The sealing assembly 617 has an upper current collecting plate 622 made of a metal and a terminal cap 27. The upper current collecting plate 622 has a planar base portion 622a provided with a through hole 622b.

Laser light is emitted to an upper surface of the base portion 622a from above in a state in which a lower surface of the base portion 622a is pressed against the third exposed portion 636 of an electrode assembly 614. By means of this laser welding, the third exposed portion 636 is joined to the lower surface of the base portion 622a.

The terminal cap 27 has a base portion 27a and a terminal portion 27b, and the terminal portion 27b includes a cylindrical surface portion formed in an annular shape and a flat top surface portion surrounded by the cylindrical surface portion. The terminal portion may have an inclined surface portion instead of the annular cylindrical surface portion. The base portion 27a of the terminal cap 27 is electrically connected to the upper current collecting plate 622 via the lead 643 having conductivity.

According to the battery 610, on the upper side of the electrode assembly 614, the axial vibration or impact can be absorbed not only by the second exposed portion 46 having spring property but also by the third exposed portion 636 having spring property. Therefore, the damage on the components and welding portions in the battery 610 can be further effectively reduced, and the reliability of the battery 10 can be further improved. However, as illustrated in FIG. 12, also in a battery 710 in which a third exposed portion 638 of a positive electrode is electrically connected to a sealing assembly 617, a second upper current collecting plate need not be disposed between a second exposed portion 146 located on an upper side relative to a first mixture layer and a groove portion 35 in the upper side of a negative electrode 112.

### (Third Embodiment)

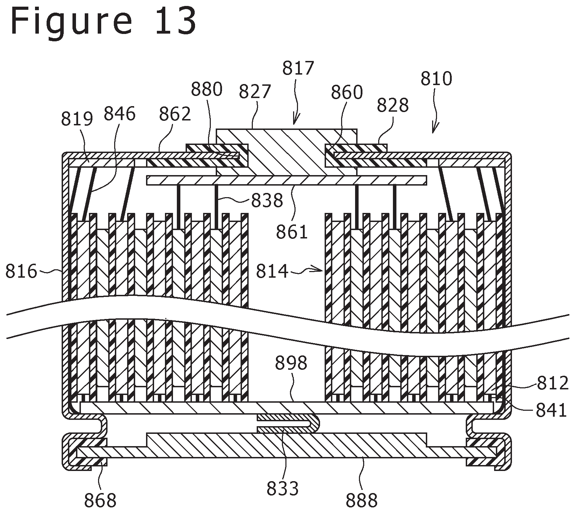

In the first and second embodiments, a case has been described where the second exposed portion 46 projecting upward in the negative electrode 12 faces the groove portion 35 in the axial direction. However, as illustrated in FIG. 13, that is, a sectional view corresponding to FIG. 1 of a cylindrical battery (hereinafter, simply referred to as a battery) 810 in a third embodiment, a second exposed portion (negative electrode core exposed portion) 846 projecting upward in a negative electrode 812 need not face a groove portion in the axial direction.

Specifically, a sealing assembly 817 of the battery 810 has a terminal cap 827 having an annular recessed portion 860 in an outer peripheral surface, and a disk-shaped upper current collecting plate 861 that is joined to a lower surface of the terminal cap 827. An end portion on a radially inward side of an annular plate portion 862 constituting an upper end portion of a housing can 816 is fitted and fixed to an annular recessed portion 880 provided in the outer peripheral surface of an annular upper gasket 828 that is fitted and fixed to the annular recessed portion 860.

The housing can 816 has, on the lower side, an S-shaped portion in cross section, and has, at a lower end portion, a U-shaped portion in cross section that opens radially inward. In the U-shaped portion in cross section, a lower gasket 868 having a U-shaped cross section is fixed. An outer edge portion of a disk-shaped bottom plate 888 is internally fitted and fixed to the recessed portion in the lower gasket 868. An electrode assembly 814 has a similar structure to the electrode assembly 614 illustrated in FIG. 10. A first exposed portion 841 constituting a lower end portion of the electrode assembly 814 is joined to an upper surface of a disk-shaped lower current collecting plate 898. The lower current collecting plate 898 is connected to a bottom plate 888 via a lead 833 having conductivity.

In an upper side and an outer peripheral side of the electrode assembly 814, a second exposed portion 846 projecting upward is joined to a lower surface of an annular second upper current collecting plate 819 joined to the lower surface of the plate portion 862. In the upper side and a radially inward side of the electrode assembly 814, a third exposed portion (positive electrode core exposed portion) 838 projecting upward is joined to the lower surface of the upper current collecting plate 861 joined to the lower surface of the terminal cap 827. Also in the battery 810 having this structure, the second exposed portion 846 includes current collecting path shortening portions that are radially adjacent to each other and are joined indirectly via the second upper current collecting plate 819, so that the electrical resistance can be significantly reduced. In addition, the negative electrode 812 can be electrically connected to two upper and lower portions of the housing can 816 by the two upper and lower systems, so that the electrical resistance can be significantly reduced. Also in the battery 810 having this structure, the vibration or impact can be absorbed by the second exposed portion 846 and the third exposed portion 838.

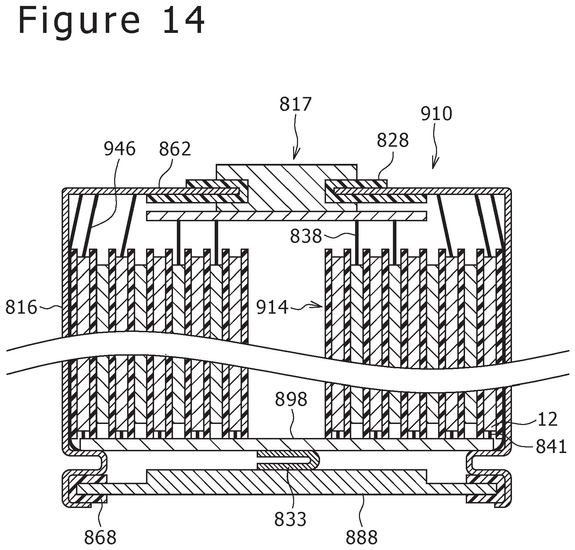

Also in the battery having this structure, as in a cylindrical battery 910 illustrated in FIG. 14, in an upper side and radially outward side of the electrode assembly 814, a second exposed portion (negative electrode core exposed portion) 946 projecting upward may face a lower surface of a plate portion 862 in the axial direction in a state of contacting or not contacting the lower surface of the plate portion 862 without providing the second upper current collecting plate 819. Alternatively, in the upper side and radially outward side of the electrode assembly 914, the second exposed portion 946 projecting upward may be joined to a lower surface of the plate portion 862 without providing the second upper current collecting plate 819.

### (Other Modifications)

A power storage device according to one embodiment comprises an electrode assembly in which a band-shaped first electrode and a band-shaped second electrode are wound with an insulating portion interposed between the first electrode and the second electrode, a housing can that houses the electrode assembly and includes a cylindrical portion, and a sealing assembly with which an opening portion of the housing can is capped. A first side end portion of the first electrode in an electrode assembly height direction on an outer side of winding in a first electrode longitudinal direction is constituted by a first electrode core. The first side end portion includes current collecting path shortening portions that are radially adjacent to each other, and are joined or contact each other directly or are joined or contact each other indirectly via the connection member having conductivity.

In such an disclosure, a case has been described where the first electrode is a negative electrode, and the first side end portion in the electrode assembly height direction is an upper end portion (projecting terminal side end portion (projections side end portion)) in the axial direction. However, a configuration may be adopted in which the first electrode is a negative electrode, and the first side end portion in the electrode assembly height direction is a lower end portion (end portion on an opposite side to the projecting terminal side) in the axial direction. Alternatively, also with regard to the positive electrode, when the first electrode cores constituting the first side end portion are radially adjacent to each other and are joined or contact each other directly or are joined or contact indirectly via the connection member having conductivity, the current collecting path on the positive electrode side can be significantly shortened and accordingly, the electrical resistance of the battery can also be significantly reduced. Accordingly, a configuration may be adopted in which the first electrode is a positive electrode, and the first side end portion in the electrode assembly height direction is an upper end portion (projecting terminal side end portion) in the axial direction. Alternatively, a configuration may be adopted in which the first electrode is a positive electrode, and the first side end portion in the electrode assembly height direction is a lower end portion (end portion on an opposite side to the projecting terminal side) in the axial direction. Note that in the positive electrode or the negative electrode, a mixture layer and an electrode core (electrode foil) which are formed in a sheet shape may be bonded via a conductive adhesive layer.

The power storage device of the present disclosure may have the following configurations.

Configuration 1: A power storage device, comprising: an electrode assembly in which a band-shaped first electrode and a band-shaped second electrode are wound with a band-shaped separator interposed between the first electrode and the second electrode; a housing can that houses the electrode assembly and includes a cylindrical portion; and a sealing assembly with which an opening portion of the housing can is capped, wherein in an axial direction of the electrode assembly, the first electrode has a first end and a second end, the first electrode collects current at a side of the first end, and parts of the second end adjacent to each other in a radial direction include a dispersion portion in which the parts are joined or contact each other directly or include a dispersion portion in which the parts are joined or contact each other indirectly via a connection member having conductivity.

Configuration 2: The power storage device described in configuration 1, wherein an outer peripheral surface of the cylindrical portion of the housing can has a groove portion recessed so that an inner peripheral portion of the cylindrical portion projects inward, and the dispersion portion overlaps with the groove portion in the axial direction.

Configuration 3: The power storage device described in Claim 1 or 2, wherein at the second end, the dispersion portion is formed in a region on an outer peripheral side.

Configuration 4: The power storage device described in configuration 3, wherein at the second end, the region on the outer peripheral side projects farther outward from the electrode assembly than a region on an inner peripheral side.

Configuration 5: The power storage device described in any one of configurations 1 to 4, wherein the first electrode has a band-shaped first core and a first mixture layer formed on the first core.

Configuration 6: The power storage device described in configuration 5, wherein at the first end, the first mixture layer is not formed, and a first exposed portion from which the first core is exposed is formed.

Configuration 7: The power storage device described in configuration 5, wherein at the second end, the first mixture layer is not formed, a second exposed portion from which the first core is exposed is formed, and the dispersion portion is formed in the second exposed portion.

Configuration 8: The power storage device described in configuration 7, wherein a resin layer is formed on the second exposed portion.

Configuration 9: The power storage device described in any one of configuration 1 to 8, further comprising a current collecting plate that is electrically connected to the second end.

Configuration 10: The power storage device described in any one of configuration 1 to 9, wherein a length of the electrode assembly in the second side end portion in the axial direction gradually decreases or continuously decreases from an outer peripheral side toward an inner peripheral side of the first electrode.

Configuration 11: The power storage device described in any one of configurations 1 to 10, wherein in the axial direction, the second electrode collects current from a side of the second end of the first electrode, and the second electrode collects current on an inner peripheral side relative to the dispersion portion.

### REFERENCE SIGNS LIST

10, 110, 610, 710, 810, 910 Battery, 11, 611 Positive electrode (second electrode), 12, 112, 212, 312, 412, 512, 612, 812 Negative electrode (first electrode), 13 Separator, 14, 114, 614, 814, 914 Electrode assembly, 16, 816 Housing can, 17, 617, 817 Sealing assembly, 18 Lower current collecting plate (current collecting plate), 18a Base portion, 18b Projecting portion, 18c Bottom plate portion, 19, 89, 99, 819 Second upper current collecting plate, 19a Upper plate portion, 19b Cutout, 20 Positive electrode lead, 27, 827 Terminal cap, 27a Annular portion, 27b Terminal portion, 28 Gasket, 28a Projecting portion, 30 Cylindrical portion, 35 Groove portion, 38 Shoulder portion, 40 First core, 41, 841 First exposed portion, 42 First mixture layer, 46, 146, 246, 446, 546, 846, 946 Second exposed portion (buffer portion), 47, 637 Resin layer, 48, 245 Peripheral end exposed portion, 50, 622 Upper current collecting plate, 50a Insertion hole, 51 Auxiliary current collecting plate, 51a Through hole, 60 Outer peripheral portion, 61 Base portion, 62 Step portion, 63 Inner peripheral portion, 68 Bottom plate portion, 69 Thin portion, 80 Metal plate, 81 Insulating plate, 81a Outer peripheral edge portion, 82 Flange portion, 83 Cylindrical portion, 446a Inner peripheral side portion, 622a Base portion, 622b Through hole, 630 The second core, 632 Second mixture layer, 636, 638, 838 Third exposed portion, 828 Upper gasket, 860 Recessed portion, 861 Upper current collecting plate, 862 Plate portion, 868 Lower gasket, 880 Recessed portion, 888 Bottom plate, 898 Lower current collecting plate

## Claims

1. A power storage device, comprising:
an electrode assembly in which a band-shaped first electrode and a band-shaped second electrode are wound with a band-shaped separator interposed between the first electrode and the second electrode;
a housing can that houses the electrode assembly and includes a cylindrical portion; and
a sealing assembly with which an opening portion of the housing can is capped,
wherein
in an axial direction of the electrode assembly, the first electrode has a first end and a second end,
the first electrode collects current at a side of the first end, and
parts of the second end adjacent to each other in a radial direction include a dispersion portion in which the parts are joined or contact each other directly or include a dispersion portion in which the parts are joined or contact each other indirectly via a connection member having conductivity.

2. The power storage device according to Claim 1, wherein
an outer peripheral surface of the cylindrical portion of the housing can has a groove portion recessed so that an inner peripheral portion of the cylindrical portion projects inward, and
the dispersion portion overlaps with the groove portion in the axial direction.

3. The power storage device according to Claim 1, wherein
at the second end, the dispersion portion is formed in a region on an outer peripheral side.

4. The power storage device according to Claim 3, wherein
at the second end, the region on the outer peripheral side projects farther outward from the electrode assembly than a region on an inner peripheral side.

5. The power storage device according to Claim 1, wherein
the first electrode has a band-shaped first core and a first mixture layer formed on the first core.

6. The power storage device according to Claim 5, wherein
at the first end, the first mixture layer is not formed, and a first exposed portion from which the first core is exposed is formed.

7. The power storage device according to Claim 5, wherein
at the second end, the first mixture layer is not formed, a second exposed portion from which the first core is exposed is formed, and
the dispersion portion is formed in the second exposed portion.

8. The power storage device according to Claim 7, wherein
a resin layer is formed on the second exposed portion.

9. The power storage device according to Claim 1 or 2, further comprising:
a current collecting plate that is electrically connected to the second end.

10. The power storage device according to Claim 1 or 2, wherein
a length of the electrode assembly in the second side end portion in the axial direction gradually decreases or continuously decreases from an outer peripheral side toward an inner peripheral side of the first electrode.

11. The power storage device according to Claim 1, wherein
in the axial direction, the second electrode collects current from a side of the second end of the first electrode, and
the second electrode collects current on an inner peripheral side relative to the dispersion portion.
